# EUROPEAN PATENT APPLICATION

(11) **EP 4 821 722 A1**
(43) Date of publication of application: **14.10.2026**
(21) Application number: 26164204.5
(22) Date of filing: 12.03.2026
(51) Int. Cl.: B60K 1/04

(54) **ELECTRIC VEHICLE**

(30) Priority: 11.04.2025 JP 2025065418
(71) Applicant: Suzuki Motor Corporation, Hamamatsu-shi, Shizuoka 432-8611 (JP)
(72) Inventor: MIKAMOTO, Takayuki, Hamamatsu-shi, 432-8611 (JP)
(74) Representative: Haseltine Lake Kempner LLP

(57) **Abstract**

An electric vehicle V includes a drive unit 4, a pair of side frames 61a and 61b, a battery case 7, and a cross member 81 disposed forward of the battery case 7 and extending in the vehicle lateral direction DW between the pair of side frames 61a and 61b. The drive unit 4 includes an electric motor 41 configured to be driven by electric power stored in the battery, and the cross member 81 includes a rear-facing wall 812a facing toward the battery case 7. The rear-facing wall 812a is inclined downward toward a front side in the vehicle longitudinal direction DL, and the battery case 7 is disposed with a downward offset relative to the rear-facing wall 812a.

## Description

### BACKGROUND OF THE INVENTION

### Field of the Invention

The present invention relates to an electric vehicle.

### Description of the Related Art

There exists an electric vehicle that is equipped with an electric motor as a driving power source and is configured to travel by power generated by the electric motor.

### Citation List

### Patent Document

Patent Document 1: Japanese Patent Laid-Open No. 2014-069686

In the electric vehicle disclosed in Patent Document 1, an electric motor is disposed beneath a cargo bed provided to the rear of the cab, such that the motor is positioned between left and right rear wheels. A battery serving as a power source is arranged forward of the electric motor.

The battery is mounted on the vehicle in the form of a pack or module in which multiple battery cells are housed within a case. The battery case is firmly secured to the vehicle body frame in order to prevent detachment.

Because the battery or battery pack constitutes a heavy component containing multiple battery cells, an impact with an obstacle such as another vehicle may compromise the connection between the battery and the vehicle body frame, potentially causing displacement or movement of the battery relative to the frame.

### SUMMARY OF THE INVENTION

In consideration of such circumstances, an object of the present invention is to provide an electric vehicle capable of ensuring safety by suppressing the influence of battery movement on the passenger compartment during a vehicle collision, while also protecting the battery.

To solve the above-mentioned problem, an electric vehicle according to one aspect of the present invention includes a drive unit serving as a driving power source for propelling the vehicle, a pair of side frames extending in a vehicle longitudinal direction and arranged with a spacing therebetween in a vehicle lateral direction, a battery case for a battery that supplies electric power to the drive unit, a cross member disposed forward of the battery case and extending in the vehicle lateral direction between the pair of side frames, and the drive unit includes an electric motor configured to be driven by electric power stored in the battery.

In this aspect, the cross member may include a rear-facing portion facing toward the battery case, which is formed to incline downward toward a front side in the vehicle longitudinal direction.

The battery case may be disposed with a downward offset relative to the rear-facing portion.

The electric vehicle may further include a bracket attached to the cross member.

In this aspect, the battery case may include a front portion and may be supported by the bracket through the front portion.

The cross member may include a fixed portion fixed to each of the pair of side frames, and an extension portion extending rearward in the vehicle longitudinal direction from the fixed portion.

In this aspect, the extension portion may be provided with the rear-facing portion and a bracket mounting portion to which the bracket is attached.

The bracket may be attached to the cross member so as to hang from the bracket mounting portion and be coupled to the front portion of the battery case, and by means of the bracket in such a configuration, the battery case may be supported relative to the pair of side frames via the cross member.

The electric vehicle may further include pillar portions standing upward from each of the pair of side frames.

In this aspect, the cross member may be arranged to extend between the pillar portions, and the fixed portion may be fixed to each of the pair of side frames via the pillar portions.

Each of the pair of side frames may include a front frame portion extending in the vehicle longitudinal direction, a rear frame portion positioned rearward of and above the front frame portion and extending in the vehicle longitudinal direction, and a connecting portion connecting the front frame portion and the rear frame portion and inclined upward toward the rear.

In this aspect, each pillar portion may be formed to stand upward from the corresponding connecting portion.

The electric vehicle may further include a cab forming a vehicle cabin.

In this aspect, the cross member may constitute a cab cross member configured to support the cab.

The battery case may be supported between the pair of side frames.

The drive unit may be disposed below the battery case.

According to one aspect of the present invention, in the event of a vehicle collision, a battery case that undergoes relative movement toward a cross member is guided downward beneath the cross member along a rear-facing portion that is inclined downward toward a front side.

As a result, it becomes possible to prevent the battery case from striking the cross member and sustaining significant damage, thereby protecting the battery.

Furthermore, by guiding the battery case downward, the battery case is displaced away from the passenger compartment, which suppresses the influence of the battery case movement on the passenger compartment and ensures occupant safety.

### BRIEF DESCRIPTION OF THE DRAWINGS

FIG. 1 is a side view of an electric vehicle according to one embodiment of the present invention.
FIG. 2 is a cross-sectional view of the electric vehicle taken along line X-X in FIG. 1.
FIG. 3A is a cross-sectional view of the electric vehicle taken along line Y-Y and FIG. 3B is a cross-sectional view of the electric vehicle taken along line Z-Z in FIG. 2.
FIG. 4 is an enlarged cross-sectional view of a portion of the electric vehicle shown in FIG. 3A, illustrating the positional relationship among a drive unit, a side frame, and a bracket.
FIG. 5 is an enlarged cross-sectional view of a portion of the electric vehicle shown in FIG. 3B, illustrating the positional relationship among the drive unit, the side frame, and the bracket.
FIG. 6 is a side view of a drive unit provided in the electric vehicle shown in FIG. 1.
FIGS. 7A and 7B are front views of the drive unit shown in FIG. 6.
FIGS. 8A and 8B are bottom views of the drive unit shown in FIG. 6.
FIG. 9 is a perspective view showing the drive unit, the side frame, and a support mechanism provided in the electric vehicle shown in FIG. 1 in an assembled state.
FIGS. 10A and 10B are perspective views illustrating the positional relationship among the drive unit, a power transmission mechanism, and a battery case provided in the electric vehicle shown in FIG. 1.
FIG. 11A is a perspective view illustrating the positional relationship between the side frame and the battery case of the electric vehicle and FIG. 11B is a plan view illustrating the positional relationship between the side frame and the battery case of the electric vehicle shown in FIG. 1.
FIG. 12A is a plan view illustrating the positional relationship among the drive unit, the side frame, and the bracket of the electric vehicle and FIG. 12B is a bottom view illustrating the positional relationship among the drive unit, the side frame, and the bracket of the electric vehicle shown in FIG. 1.
FIG. 13 is a plan view showing the drive unit and peripheral components provided in the electric vehicle shown in FIG. 1 in an assembled state.
FIG. 14 is a front view illustrating the positional relationship between the drive unit and a bracket cross member of the electric vehicle shown in FIG. 1.

### DETAILED DESCRIPTION OF THE PREFERRED EMBODIMENT

An embodiment of the present invention is described below with reference to drawings.

### (Overall Configuration of the Electric Vehicle)

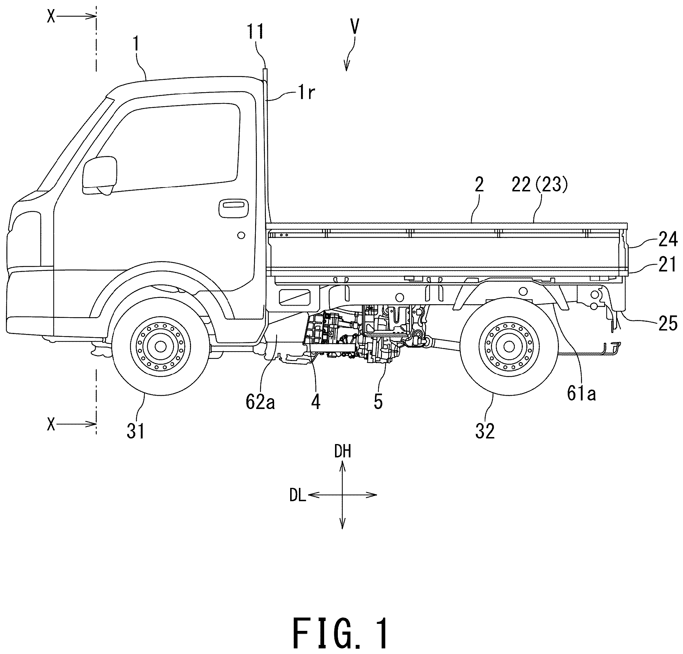

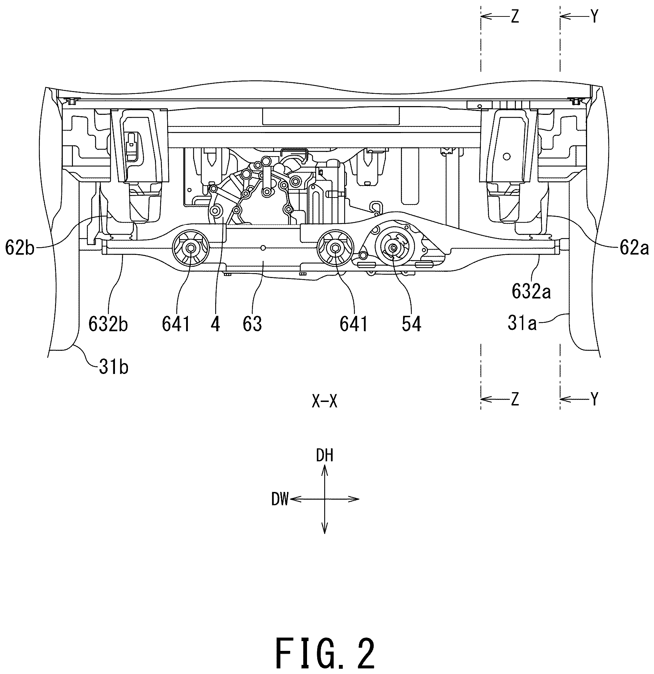

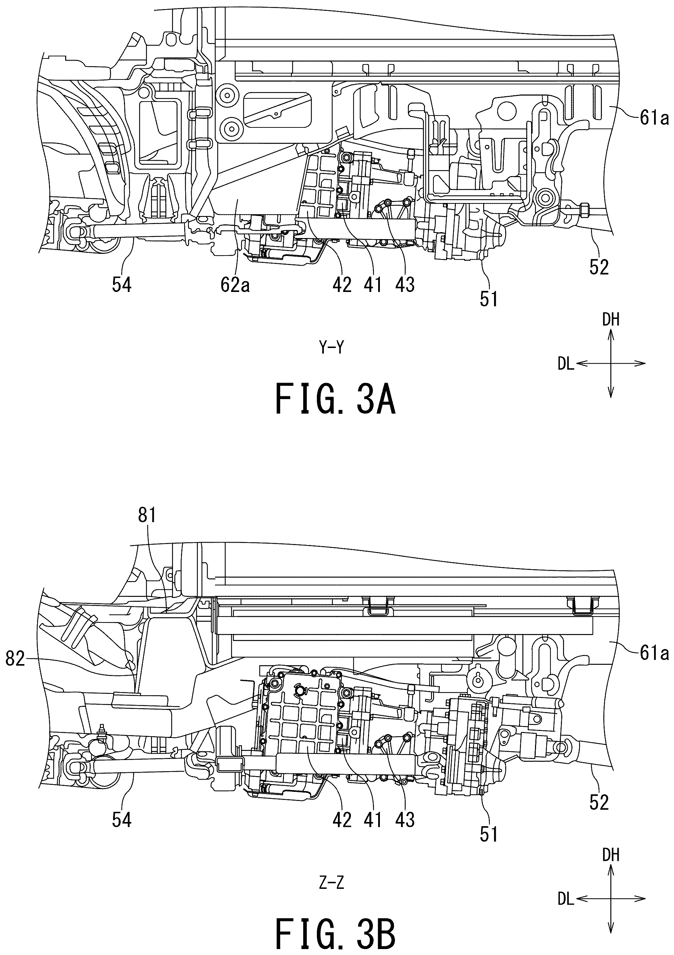

FIG. 1 is a side view of an electric vehicle (hereinafter sometimes simply referred to as "vehicle") V according to one embodiment of the present invention. FIG. 2 is a cross-sectional view of the vehicle V taken along line X-X in FIG. 1, and FIGS. 3A and 3B are cross-sectional views of the vehicle V taken along lines Y-Y and Z-Z in FIG. 2. The cross-section along line Y-Y is shown in FIG. 3A, and the cross-section along line Z-Z is shown in FIG. 3B.

In FIG. 1, arrow DL indicates the longitudinal direction of the vehicle V, and arrow DH indicates the vertical direction of the vehicle V. The vehicle longitudinal direction DL corresponds to the front-rear direction of the vehicle V.

In the drawing, the left side corresponds to the front side of the vehicle V, and the right side corresponds to the rear side.

In the following description, the vertical direction perpendicular to the ground is indicated by arrow DH, and the width or lateral direction of the vehicle V is indicated by arrow DW (see FIG. 2). The right-hand side is defined as the right side when facing forward, and the left-hand side is defined as the left side.

In this embodiment, the electric vehicle V is a flat-body type compact EV truck, and includes a cab 1 and a cargo bed 2.

As shown in FIG. 1, the cab 1 is provided at the front portion of the vehicle V and includes a driver's seat for a driver to sit on and a passenger seat for an occupant to sit on within a cabin space. The cab 1 is disposed above a pair of front wheels 31 located on the left and right sides.

The cargo bed 2 is provided behind the cab 1. A cab back panel 11 is mounted to a rear portion 1r of the cab 1. The cab back panel 11 can serve as a support for the cargo when loading elongated cargo such as boards by leaning the cargo against the panel.

The cargo bed 2 extends rearward from a vicinity of the lower end of the cab back panel 11 to a position beyond a pair of rear wheels 32 disposed on the left and right sides. Beneath the cargo bed 2, a drive unit 4 and a power transmission mechanism 5, which will be described later, are arranged.

The cargo bed 2 includes a flat floor portion (hereinafter referred to as "deck floor") 21 on which cargo is loaded. The deck floor 21 is surrounded on four sides by the rear portion 1r of the cab 1 and by movable gates 22, 23, and 24, commonly referred to as "side boards." Specifically, the cargo bed 2 includes, as the movable gates, a left side gate 22 provided at the left end of the deck floor 21, a right side gate 23 provided at the right end of the deck floor 21, and a rear gate 24 provided at the rear end of the deck floor 21. The deck floor 21 has a rectangular shape elongated in the vehicle longitudinal direction DL and forms a cargo-receiving surface of the cargo bed 2.

The left side gate 22 and the right side gate 23 are rotatably supported relative to the deck floor 21 by side hinges (not shown) provided at respective lateral edges of the deck floor 21. Each of the left and right side gates 22, 23 can be rotated approximately 90° outward or laterally from a closed position to an open position about the corresponding side hinge.

The rear gate 24 is rotatably supported relative to the deck floor 21 by a rear hinge (not shown) provided at the rear end of the deck floor 21, and is rotatable between a closed position and an open position about the rear hinge. In the closed position, the rear gate 24 stands upright perpendicular to the deck floor 21 and abuts against the rear ends of the left and right side gates 22, 23, thereby defining the rear boundary of the cargo space above the deck floor 21. In the open position, the rear gate 24 lies parallel to the deck floor 21, or horizontally similar to the left and right side gates 22, 23, thereby opening the deck floor 21 rearward.

The cargo bed 2 further includes a rear downward-extension portion 25 that extends vertically downward from the rear end of the deck floor 21 beneath the rear gate 24. The rear downward-extension portion 25 is provided with a tail lamp unit, a backup lamp, and a rear reflector (not shown).

### (Drive Unit and Power Transmission Mechanism)

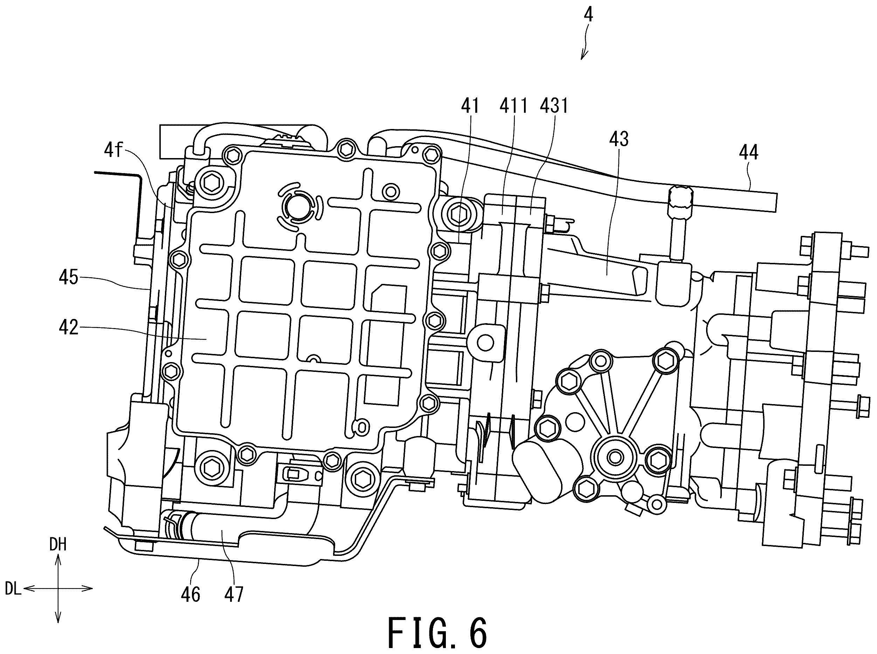

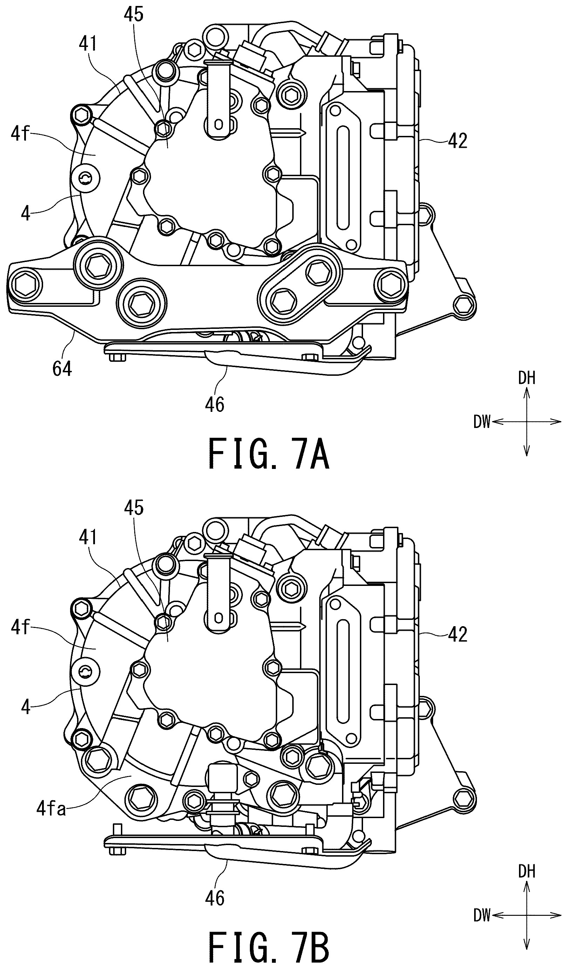

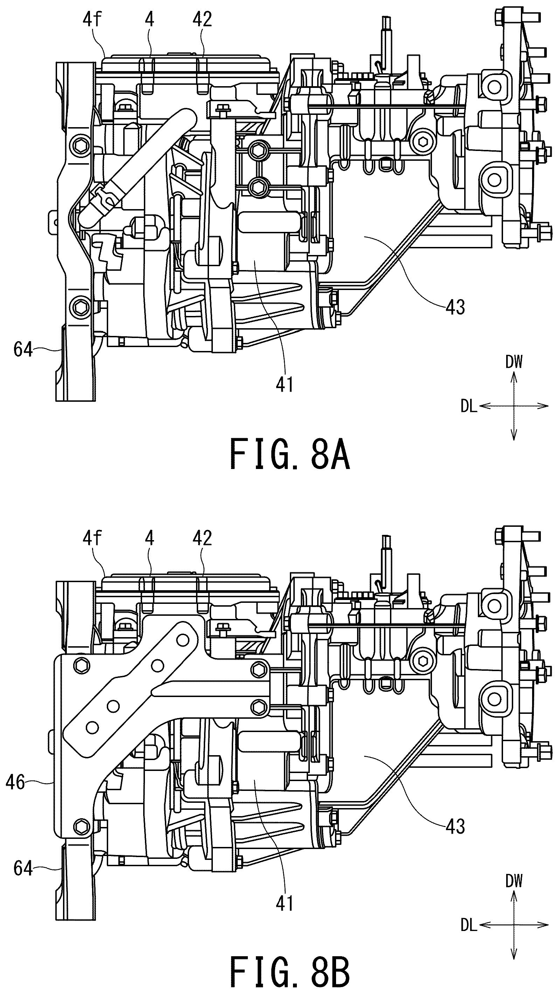

FIG. 6 is a side view of a drive unit 4 provided in the electric vehicle V according to the present embodiment, as viewed from the left side. FIGS. 7A and 7B are front views of the drive unit 4, and FIG. 8A and 8B are bottom views thereof.

The electric vehicle V is equipped with the drive unit 4 serving as a driving source for propelling the vehicle V.

As shown in FIG. 6, the drive unit 4 includes, as principal components, an electric motor 41, an inverter 42, and a reduction mechanism 43. The drive unit 4 is disposed between the front wheels 31 and the rear wheels 32 in the longitudinal direction DL of the vehicle V, specifically beneath the cargo bed 2 and behind the cab 1, in proximity to the lower-end portion of the cab 1 (see FIGS. 2 and 3).

The electric motor 41 may be, for example, a permanent magnet synchronous motor, arranged such that its rotational axis extends along the vehicle longitudinal direction DL. The term "rotational axis" refers to the central axis of the rotor of the electric motor 41. In other words, the rotational axis of the electric motor 41 is oriented perpendicular to the lateral direction DW of the vehicle V. The electric motor 41 is not limited to a permanent magnet synchronous motor, but may alternatively be an induction motor or a switched reluctance motor, or other types of AC motors.

The electric vehicle V further includes a battery serving as a power source for the electric motor 41. The battery is housed within a battery case 7 described later. In the battery case 7, a plurality of batteries or battery cells are accommodated in the form of a module in which the battery cells are connected in series to one another.

The inverter 42 converts direct current power supplied from the battery housed in the battery case 7 into alternating current power, and adjusts the frequency and amplitude of the drive current to be supplied to the electric motor 41. Accordingly, the rotational speed and torque of the electric motor 41 can be controlled. The inverter 42 is disposed on one side of the electric motor 41 in the vehicle lateral direction DW, and in this embodiment, the inverter 42 is arranged to the left side of the electric motor 41, adjacent to the left side surface of the electric motor 41, and is fastened to the electric motor 41 by bolts or other fastening members.

The reduction mechanism 43 is disposed behind the electric motor 41 and integrally formed therewith. Specifically, the housing of the reduction mechanism 43 and the motor case of the electric motor 41 are joined together via flanges 411 and 431. The reduction mechanism 43 transmits the output of the electric motor 41 to an output shaft (i.e., the rear-wheel drive shaft 52 and the front-wheel drive shaft 54 described later) at a predetermined gear ratio. The gear ratio may be variable, thereby imparting a transmission function to the reduction mechanism 43.

Direct current power from the battery is supplied to the inverter 42 via a high-voltage power supply line 44. The direct current power supplied to the inverter 42 is converted into alternating current power by the inverter 42, and is delivered to the electric motor 41 through power lines disposed inside the housing of the inverter 42.

A rotational position sensor 45 is mounted on the front surface portion 4f of the drive unit 4 to detect the rotational position of the electric motor 41, specifically the rotational position of the rotor (not shown). Based on the detected rotational position, the operating state of the electric motor 41, such as its rotational speed, can be determined.

A protective cover 46 is mounted on the bottom portion of the drive unit 4. Beneath the main body of the drive unit 4, a pipe 47 for circulating cooling water for the electric motor 41 and the inverter 42 is disposed. The protective cover 46 protects the cooling water pipe 47 from contact with foreign objects such as stones.

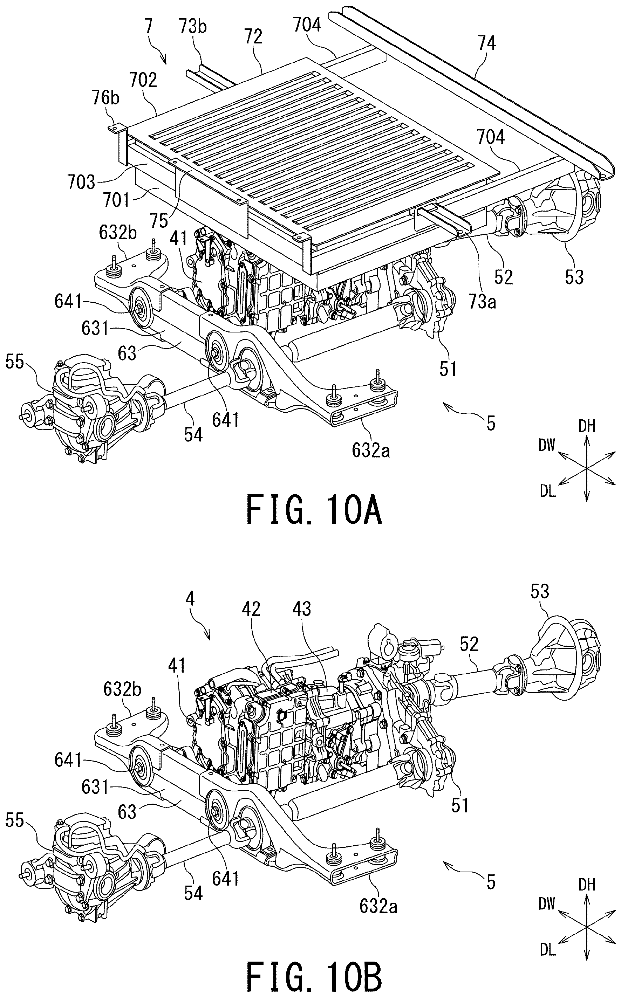

FIGS. 10A and 10B are perspective views showing the drive unit 4 and the power transmission mechanism 5 in an assembled state. FIG. 10A illustrates the relative arrangement of the battery case 7 in the overall assembly by depicting the battery case 7 together with the associated components, while FIG. 10B shows the configuration of the assembly itself with the battery case 7 removed.

The power transmission mechanism 5 includes a power distribution device 51, a rear-wheel drive shaft 52, a rear differential gear 53, a front-wheel drive shaft 54, and a front differential gear 55.

The power distribution device 51 is configured to selectively interrupt transmission of power to the front-wheel drive shaft 54 or the front wheels 31. Accordingly, the electric vehicle V can be operated in either a four-wheel drive mode or a two-wheel drive mode. In the four-wheel drive mode, the power distribution device 51 distributes the power of the drive unit 4, specifically the output of the reduction mechanism 43, to both the front wheels 31 and the rear wheels 32. In the two-wheel drive mode, the power distribution device 51 transmits the output only to the rear wheels 32.

The electric vehicle V is not limited to the above configuration, and may alternatively be operated exclusively in the four-wheel drive mode. Furthermore, the power distribution device 51, the front-wheel drive shaft 54, and the front differential gear 55 may be omitted, such that the electric vehicle V is always operated in the two-wheel drive mode with rear-wheel drive.

During operation in the four-wheel drive mode, the power distribution device 51 distributes the power output from the electric motor 41 via the reduction mechanism 43 to both the rear-wheel drive shaft 52 and the front-wheel drive shaft 54. The power distribution device 51 includes a power transmission medium such as a chain, and transmits a portion of the power to the rear wheels 32 via the rear-wheel drive shaft 52, while transmitting another portion of the power to the front-wheel drive shaft 54 and the front wheels 31 via the power transmission medium.

The rear-wheel drive shaft 52 extends rearward in the vehicle longitudinal direction DL from the power distribution device 51, thereby power-connecting the drive unit 4 to the rear differential gear 53. The power distributed to the rear-wheel drive shaft 52 by the power distribution device 51 is transmitted to the rear differential gear 53. The rear-wheel drive shaft 52 may be embodied as a propeller shaft.

The rear differential gear 53 is disposed between the left and right rear wheels 32, and transmits the power delivered via the rear-wheel drive shaft 52 to each of the left and right rear wheels.

The front-wheel drive shaft 54 extends forward in the vehicle longitudinal direction DL from the power distribution device 51, thereby power-connecting the drive unit 4 to the front differential gear 55. The power distributed to the front-wheel drive shaft 54 by the power distribution device 51 is transmitted to the front differential gear 55. The front-wheel drive shaft 54, similar to the rear-wheel drive shaft 52, may be embodied as a propeller shaft.

The front differential gear 55 is disposed between the left and right front wheels 31, and transmits the power delivered via the front-wheel drive shaft 54 to each of the left front wheel 31a and the right front wheel 31b (see FIG. 2).

### (Support Structure for the Drive Unit)

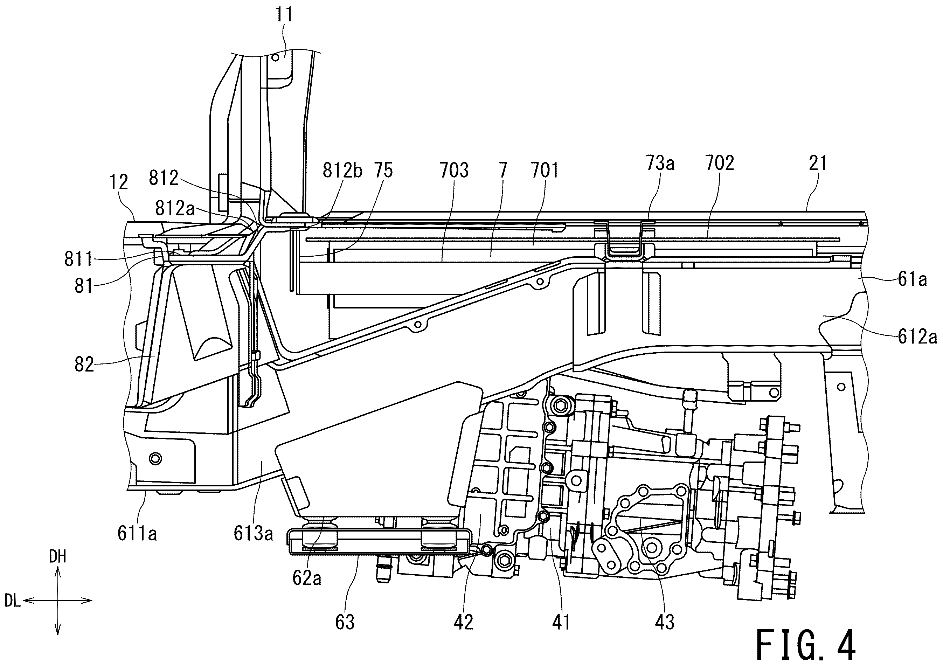

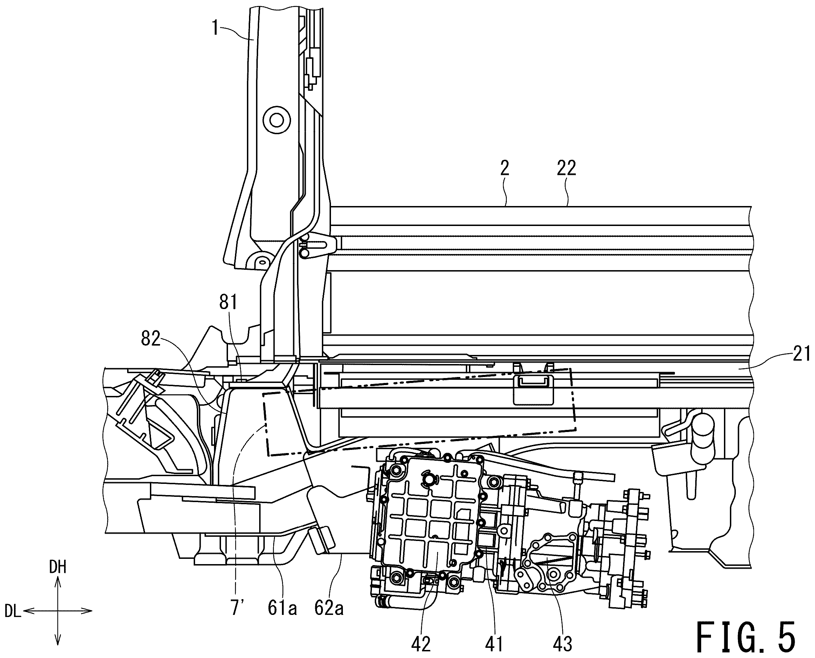

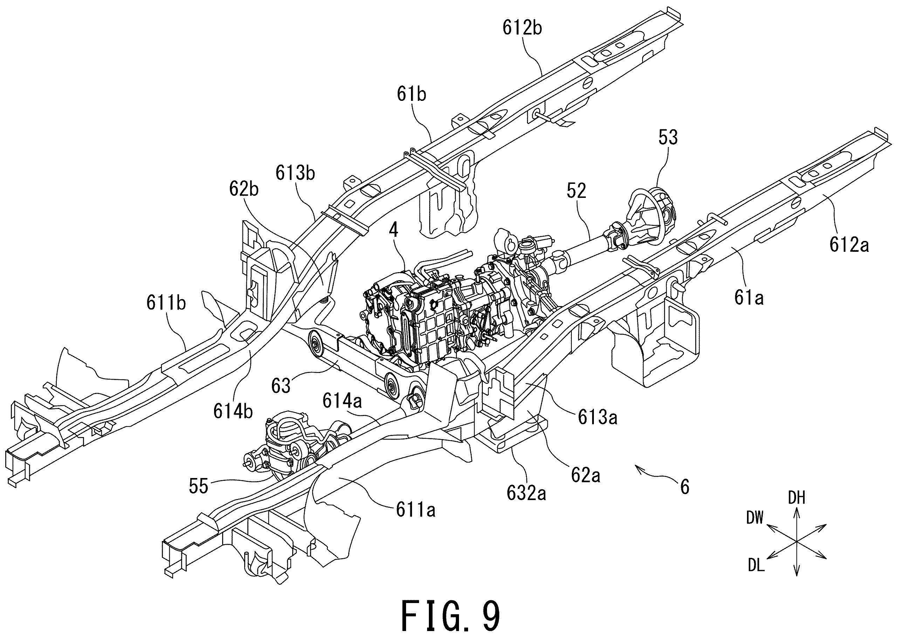

FIGS. 4, 5, and 9 illustrate a support structure for a drive unit 4 according to the present embodiment. FIGS. 4 and 5 show the positional relationship among the drive unit 4, a side frame 61a, and a bracket 62a. FIG. 4 is an enlarged view of the cross section shown in FIG. 3A, and FIG. 5 is an enlarged view of the cross section shown in FIG. 3B. FIG. 9 is a perspective view showing the drive unit 4, the side frames 61a and 61b, and a support mechanism 6 of the electric vehicle V in an assembled state.

As shown in FIG. 9, the electric vehicle V includes a pair of side frames 61a and 61b. The pair of side frames 61a and 61b respectively include front frame portions 611a and 611b, rear frame portions 612a and 612b, and connecting portions 613a and 613b.

The front frame portions 611a and 611b are disposed at a lower front region of the electric vehicle V and extend in the vehicle longitudinal direction DL.

The rear frame portions 612a and 612b are disposed rearward of the front frame portions 611a and 611b and are positioned above the front frame portions 611a and 611b. The rear frame portions 612a and 612b extend substantially parallel to the front frame portions 611a and 611b in the vehicle longitudinal direction DL.

The connecting portions 613a and 613b are connected to rear end portions of the front frame portions 611a and 611b, extend obliquely upward toward the rear, and are connected to front end portions of the rear frame portions 612a and 612b. In other words, the connecting portions 613a and 613b join the front frame portions 611a and 611b to the rear frame portions 612a and 612b, thereby integrally coupling them.

A side frame on the left side (hereinafter referred to as "left side frame") 61a is formed by the front frame portion 611a, the rear frame portion 612a, and the connecting portion 613a arranged on the left side of a vehicle body centerline CL of the electric vehicle V extending in the vehicle longitudinal direction DL (hereinafter sometimes referred to as "fore-and-aft centerline"). Likewise, a side frame on the right side (hereinafter referred to as "right side frame") 61b is formed by the front frame portion 611b, the rear frame portion 612b, and the connecting portion 613b arranged on the right side of the fore-and-aft centerline.

The left side frame 61a and the right side frame 61b are spaced apart from each other in the vehicle lateral direction DW and are arranged parallel to each other. The left and right side frames 61a and 61b are interconnected each other by a plurality of frame cross members (not shown) extending across the vehicle lateral direction DW between the pair of side frames 61a and 61b. A vehicle body frame of the electric vehicle V is constituted as an assembly of the pair of side frames 61a and 61b and the plurality of frame cross members.

A cab 1 is disposed above the front frame portions 611a and 611b, and a cargo bed 2 is disposed above the rear frame portions 612a and 612b. The front wheels 31 are suspended from the front frame portions 611a and 611b, and the rear wheels 32 are suspended from the rear frame portions 612a and 612b. The connecting portions 613a and 613b are located between the cab 1 and the cargo bed 2, specifically in a region obliquely downward and rearward of a rear surface portion 1r of the cab 1 or a cab back panel 11, and close to the rear surface portion 1r or the cab back panel 11.

In this embodiment, inwardly inclined portions 614a and 614b are formed in the connecting portions 613a and 613b, respectively, so as to narrow the distance between the left and right connecting portions 613a and 613b provided respectively in the left and right side frames 61a and 61b. The inwardly inclined portions 614a and 614b are formed in each of the left and right side frames 61a and 61b over a predetermined range in the vehicle longitudinal direction DL, extending from the connecting portions 613a and 613b beyond the connection or boundary with the front frame portions 611a and 611b (that is, beyond the front end edges of the connecting portions 613a and 613b). Accordingly, in the pair of side frames 61a and 61b, the spacing between the regions of the front frame portions 611a and 611b located forward of the inwardly inclined portions 614a and 614b is narrower than the spacing between the rear frame portions 612a and 612b.

### (Detailed Configuration of the Support Mechanism)

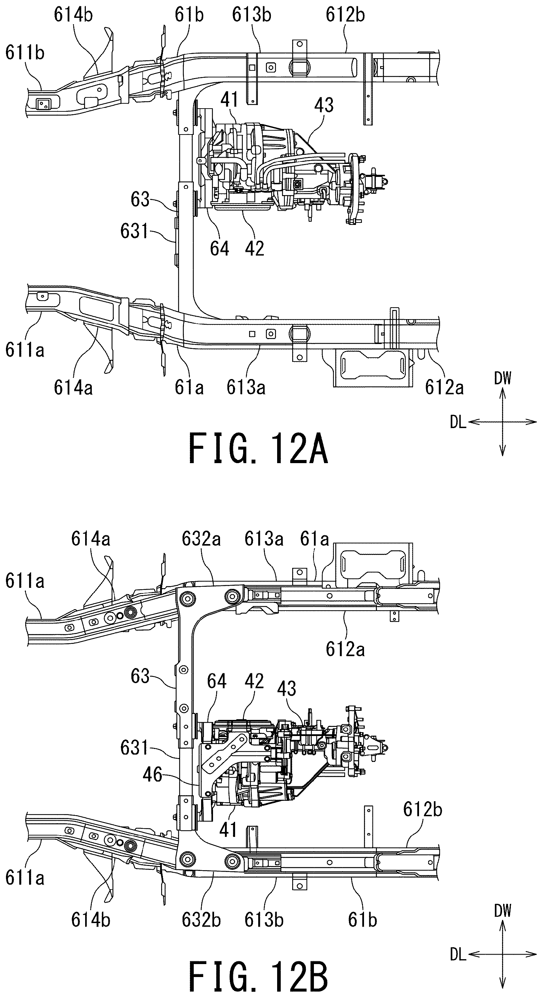

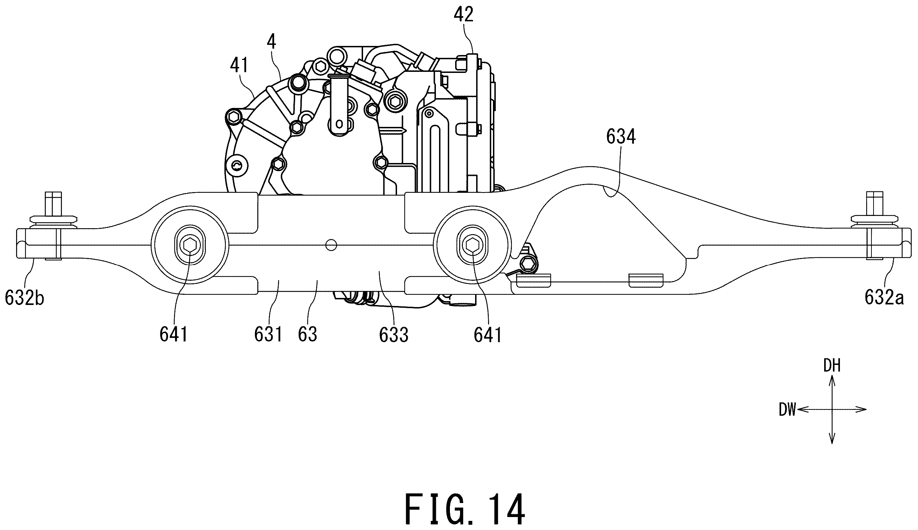

FIG. 12A and 12B illustrate the positional relationship among the drive unit 4, the side frames 61a and 61b, and a cross member 63 in the electric vehicle V in a plan view (FIG. 12A) and a bottom view (FIG. 12B). FIG. 14 is a front view showing the positional relationship between the drive unit 4 and the cross member 63. Reference is also made to FIG. 9.

As shown in FIG. 9, in the present embodiment, a support mechanism 6 for the drive unit 4 is provided, and the drive unit 4 is supported relative to the left and right side frames 61a and 61b by the support mechanism 6.

The support mechanism 6 includes brackets 62a and 62b, and the cross member 63.

The brackets 62a and 62b (hereinafter collectively referred to as "side brackets") are mounted respectively to the left side frame 61a and the right side frame 61b, and the drive unit 4 is suspended and supported between the left and right side brackets 62a and 62b.

In this embodiment, the side brackets 62a and 62b are attached to the connecting portions 613a and 613b of the left and right side frames 61a and 61b, respectively. More specifically, the side brackets 62a and 62b are mounted at a position near the front ends of the connecting portions 613a and 613b, closer to the front frame portions 611a and 611b. The side brackets 62a and 62b are suspended downward from the connecting portions 613a and 613b and extend below the lower surfaces of the front frame portions 611a and 611b. In other words, the lower end portions of the side brackets 62a and 62b are positioned below the front frame portions 611a and 611b.

The cross member 63 extends across the vehicle lateral direction DW between the left and right side brackets 62a and 62b.

As shown in FIGS. 12A and 12B, the drive unit 4 is mounted to the cross member 63 and is disposed between the pair of side frames 61a and 61b. Thus, the drive unit 4 is in a state where it is indirectly supported relative to the pair of side frames 61a and 61b via the cross member 63. The drive unit 4 and the cross member 63 are arranged such that the cross member 63 extends across the front side of the drive unit 4 in the vehicle lateral direction DW.

### (Configuration of the Cross Member)

Referring again to FIGS. 12 and 14, and as shown in FIG. 12B, the cross member 63 includes a main body portion 631 and a pair of coupling portions 632a and 632b.

As shown in FIG. 14, the main body portion 631 extends in the vehicle lateral direction DW at a position forward of the drive unit 4. The cross member 63 includes, at a location of the main body portion 631 that is offset to the right relative to the center in the vehicle lateral direction DW, a mounting portion 633 to which the drive unit 4 is mounted. That is, in this embodiment, the mounting portion 633 for the drive unit 4 is formed in the main body portion 631 of the cross member 63. The drive unit 4 is mounted to the cross member 63 at the mounting portion 633.

The mounting portion 633 is offset to one side relative to the fore-and-aft centerline of the vehicle V in order to secure a space for accommodating the front-wheel drive shaft 54 that transmits power from the drive unit 4 to the front wheels 31. This layout also takes into account the overall weight balance of the assembly including the drive unit 4 and the power transmission mechanism 5. The main body portion 631 of the cross member 63 is provided with an opening 634 extending through it in the vehicle longitudinal direction DL, and the front-wheel drive shaft 54 is disposed through this opening 634.

The pair of coupling portions 632a and 632b are continuously formed at the opposite ends of the main body portion 631 in the vehicle lateral direction DW. The cross member 63 is coupled to the left and right side brackets 62a and 62b at these coupling portions 632a and 632b.

As shown in FIGS. 12A and 12B, the coupling portions 632a and 632b extend rearward in the vehicle longitudinal direction DL from their connection to the main body portion 631. In other words, the coupling portions 632a and 632b have a shape that is elongated in the vehicle longitudinal direction DL relative to the vehicle lateral direction DW, and its dimension in the vehicle longitudinal direction DL is greater than that of the main body portion 631 in the same direction. The coupling portions 632a and 632b are coupled to the side brackets 62a and 62b at multiple positions spaced apart in the vehicle longitudinal direction DL.

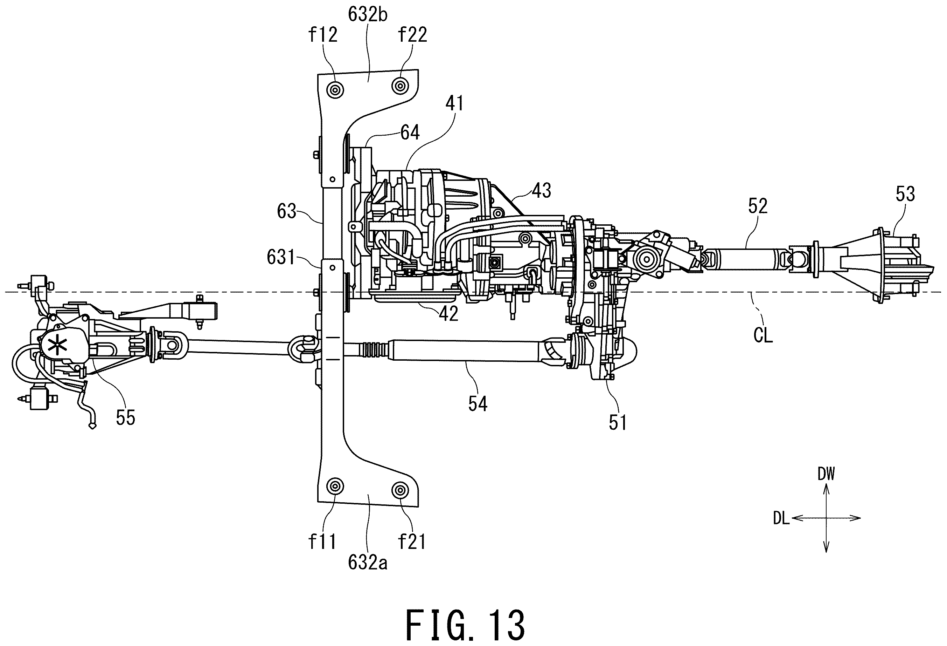

FIG. 13 is a plan view showing the drive unit 4 and surrounding components (including the power transmission mechanism 5 and the cross member 63) provided in the electric vehicle V in an assembled state.

The cross member 63 is fixed to the side brackets 62a and 62b by fastening members such as bolts.

As shown in FIG. 13, the coupling portions 632a and 632b include first fastening portions f11 and f12 located on extensions of the main body portion 631 in the vehicle lateral direction DW, and also second fastening portions f21 and f22 located rearward of the first fastening portions f11 and f12. The second fastening portions f21 and f22 are positioned outward in the vehicle lateral direction DW relative to the first fastening portions f11 and f12.

In other words, on the left side of the main body portion 631, the second fastening portion f21 is located to the left of the first fastening portion f11, and on the right side of the main body portion 631, the second fastening portion f22 is located to the right of the first fastening portion f12.

Accordingly, in the pair of coupling portions 632a and 632b, the spacing between the second fastening portions f21 and f22 is greater than the spacing between the first fastening portions f11 and f12. As described above, this is because the reduction in spacing between the pair of side frames 61a and 61b is formed over a predetermined range extending from the connecting portions 613a and 613b (specifically, the mid portions of the connecting portions 613a and 613b in the present embodiment) toward the front frame portions 611a and 611b (see FIGS. 12A and 12B). Such a configuration contributes to improved support stability of the drive unit 4 by the cross member 63.

As shown in FIGS. 12A and 12B, the drive unit 4 is coupled to the cross member 63 via a bracket 64 (hereinafter referred to as "front bracket").

Referring also to FIGS. 7A and 7B, the front bracket 64 has an elongated shape in the vehicle lateral direction DW relative to the vertical direction DH. The front bracket 64 is fixed to the front surface portion 4f of the drive unit 4 at multiple locations spaced apart in the vehicle lateral direction DW by fastening members such as bolts.

In this embodiment, the front bracket 64 is mounted to a lower front region 4fa of the front surface portion 4f of the drive unit 4, which is located below the rotational axis of the electric motor 41. A motor case of the electric motor 41 is extended radially outward from the rotational axis of the electric motor 41, and fixing portions (e.g., a bolt insertion hole) to which the front bracket 64 is fixed are formed in this extension. Accordingly, in a front view of the electric vehicle V as seen from the front along the vehicle longitudinal direction DL, the front bracket 64 overlaps the lower front portion 4fa of the drive unit 4.

The front bracket 64 is mounted to a cross member 63 via mount bushes 641.

As shown in FIG. 14, the mount bushes 641 are provided at multiple locations on the cross member 63, spaced apart from one another in the vehicle lateral direction DW. An axial member for receiving a rubber bush is attached to the front bracket 64, while a cylindrical retaining frame is provided on the cross member 63. The rubber bush is disposed between the axial member and the retaining frame. As a result, the front bracket 64 is mounted to the cross member 63 through the rubber bush, and the mount bush 641 elastically support the drive unit 4 relative to the cross member 63. The rubber bush suppresses transmission of vibration from the drive unit 4, particularly from the electric motor 41, to the cross member 63.

Further, in the state where the front bracket 64 is mounted to the cross member 63, the mount bushes 641 are positioned below the rotational axis of the electric motor 41. The front bracket 64 is located between the drive unit 4 and the cross member 63 in the vehicle longitudinal direction DL, and in a front view of the electric vehicle V, the front bracket 64 is concealed behind the cross member 63.

Referring again to FIG. 4, in the state where the drive unit 4 is mounted to the cross member 63 and supported relative to the pair of side frames 61a and 61b, an inverter 42 is arranged such that, in a side view of the electric vehicle V as seen from one side in the vehicle lateral direction DW, specifically from the left side of the electric vehicle V as shown in FIG. 4, a portion of the inverter 42 overlaps a side bracket 62a.

In this embodiment, the inverter 42 is disposed to the left of the electric motor 41, adjacent to its left side surface. In the side view (i.e., as viewed from the left side), the inverter 42 not only overlaps the side bracket 62a but also overlaps a connecting portion 613a of the left side frame 61a, which extends diagonally upward toward the rear. By overlapping both the side bracket 62a and the connecting portion 613a of the left side frame 61a, the inverter 42 can be concealed over a wider area from the outside, thereby enabling the inverter 42 to be protected more robustly and across a broader region.

### (Battery Case and Suspension Structure)

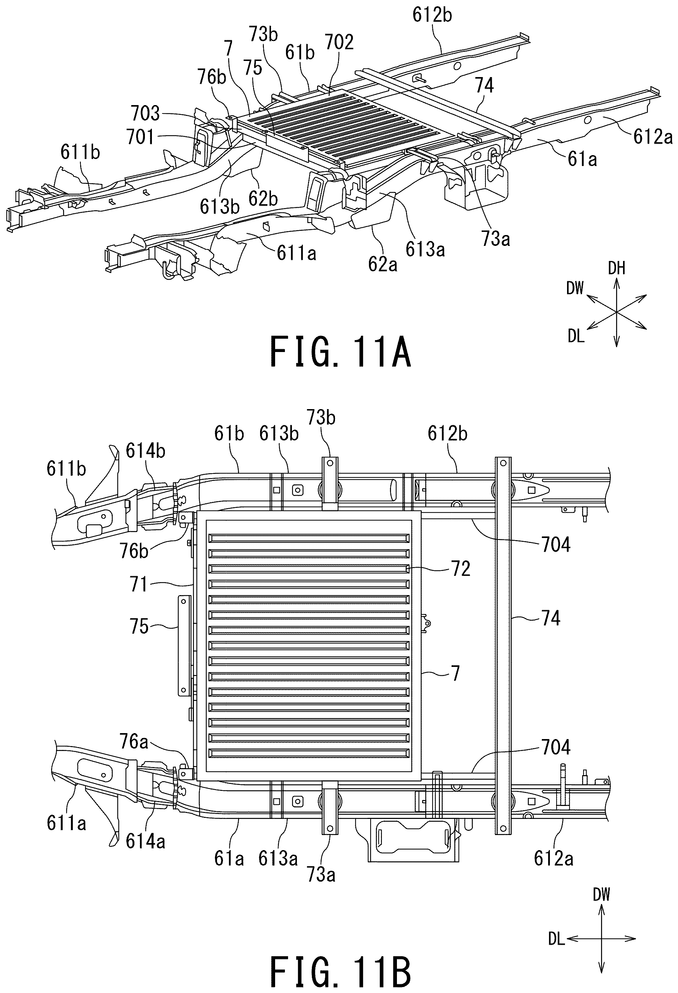

FIG. 11A is a perspective view illustrating the positional relationship between a battery case 7 and side frames 61a and 61b in the electric vehicle V, and FIG. 11B is a plan view illustrating the same.

As described above, the battery case 7 is suspended between the left and right side frames 61a and 61b and is disposed above the drive unit 4.

As shown in FIG. 11B, the battery case 7 is, as a whole, a flat case having an elongated shape extending in the vehicle lateral direction DW relative to the vehicle longitudinal direction DL, and has a dimension substantially equal to the spacing between the rear frame portions 612a and 612b of the pair of side frames 61a and 61b in the vehicle lateral direction DW. That is, the left or right side surface of the battery case 7, which faces outward in the vehicle lateral direction DW, is positioned close to the inner surface of the corresponding side frame 61a or 61b.

The battery case 7 is disposed between the pair of side frames 61a and 61b and is supported in a suspended manner relative to these side frames 61a and 61b.

Specifically, the battery case 7 is suspended between the rear frame portion 612a of the left side frame 61a and the rear frame portion 612b of the right side frame 61b in the vehicle lateral direction DW. In this state, a front end portion 71 of the battery case 7 is positioned close to a cab back panel 11 in the vehicle longitudinal direction DL, and an upper surface portion 72 is positioned close to a deck floor 21 of the cargo bed 2 in the vertical direction DH.

In this embodiment, the battery case 7 includes a case body 701, an upper cover 702, and a support frame 703.

The case body 701 has a generally box-like shape that is open at its upper side and defines an internal space in which a plurality of battery cells are accommodated in the form of a module.

The upper cover 702 is placed on an upper surface of the case body 701 and closes the opening. In this arrangement, a front end portion of the case body 701 defines a front end portion 71 of the battery case 7, and an upper surface portion of the upper cover 702 defines an upper surface portion 702 of the battery case 7.

The support frame 703 is a generally quadrilateral frame member and is joined to the case body 701 on its four side surfaces. Specifically, a front side portion of the support frame 703 is joined to a front end surface of the case body 701, a rear side portion is joined to a rear end surface of the case body 701, a left side portion is joined to a left end surface of the case body 701, and a right side portion is joined to a right end surface of the case body 701.

The battery case 7 further includes support arms 704 extending rearward from the support frame 703. Each support arm 704 is formed as a rearward extension of the left and right side portions of the support frame 703.

The battery case 7 is supported at multiple locations (two on each side in the present embodiment) spaced apart in the fore-and-aft direction by a plurality of brackets 73 and 74 relative to the left and right side frames 61a and 61b. The battery case 7 is supported by brackets 73a and 73b (hereinafter referred to as "case-side brackets") mounted near the center of the side surfaces of the case body 701, and by a bracket 74 (hereinafter referred to as "case-rear bracket") extending between the pair of support arms 704 near their rear ends. The case-side brackets 73a and 73b are cantilevered relative to the case body 701.

A cross member 81 (hereinafter referred to as "cab cross member") is disposed in front of the battery case 7, and a bracket 75 (hereinafter referred to as "case-front bracket") extending downward from the cab cross member 81 is attached thereto (see FIG. 4).

The battery case 7 includes a front end portion 71 that is joined to a case-front bracket 75. Thus, the battery case 7 is supported not only by the left and right side frames 61a and 61b, but also by the cab cross member 81 via the case-front bracket 75. When comparing the case body 701 with the support frame 703, the end surface of a front edge portion of the support frame 703 (that is, the front end surface of the support frame 703) is positioned forward of the front end surface of the case body 701. In this embodiment, the case front bracket 75 is joined to the cab cross member 81 on one side and to the front end surface of the support frame 703 on the other side.

A pair of pillar portions (hereinafter referred to as "side pillars") 82 extend upward from the respective side frames 61a and 61b, and the cab cross member 81 extends across the vehicle lateral direction DW between these side pillars 82 (see FIG. 5). The side pillars 82 rise from regions in the side frames 61a and 61b near the boundary between the front frame portions 611a and 611b and the connecting portions 613a and 613b.

In addition to the case-front bracket 75, at the front end portion 71 of the battery case 7, auxiliary brackets 76a and 76b are provided on the left and right sides of the case-front bracket 75. Thus, although indirectly, the battery case 7 supported by the cab cross member 81 is supported at seven or more locations relative to the vehicle body frame including the pair of side frames 61a and 61b, via the case-side brackets 73, the case-rear bracket 74, the case-front bracket 75, and the auxiliary brackets 76.

As shown in FIG. 4, the cab cross member 81 is disposed below a rear end portion of a cab 1 and supports a floor portion (hereinafter referred to as "cab floor") 12 of the cab 1. The cab cross member 81 has a structure with sufficient strength to withstand the weight of the cab 1 and its occupants.

In the illustrated vertical cross-section taken along the vehicle longitudinal direction DL, the cab cross member 81 has an overall upwardly open U-shaped or inverted-hat profile, and includes a bottom surface portion 811 and a rearward extension portion 812.

The bottom surface portion 811 is formed to extend across the entire width of the cab cross member 81 in the vehicle lateral direction DW, and the cab cross member 81 is joined, at both end regions of the bottom portion 811, to upper surface portions of the respective side pillars 82.

The rearward extension portion 812 includes a rear-facing wall 812a and an extension portion 812b. The rear-facing wall 812a is continuously connected to the bottom surface portion 811 and extends upwardly toward the rear. The extension portion 812b continues rearwardly from the rear-facing wall 812a and forms a flat mounting surface to which the case front bracket 75 is joined. The rear-facing wall 812a corresponds to the "rear-facing portion" according to the present invention.

Here, the rear-facing wall 812a of the cab cross member 81, which faces toward the end surface of the front end portion 71 of the battery case 7 (i.e., the front end surface of the case body 701), is inclined upwardly toward the rear in the vehicle longitudinal direction DL. In other words, the cab cross member 81 is formed such that the rear-facing wall 812a is inclined downwardly toward the front in the vehicle longitudinal direction DL.

Furthermore, the battery case 7 is suspended between the pair of side frames 61a and 61b and is disposed downwardly offset, or disposed with a downward offset, relative to the rear-facing wall 812a of the cab cross member 81. The battery case 7 and the cab cross member 81 partially overlap in the vehicle longitudinal direction DL. Specifically, an upper surface portion 72 of the battery case 7 is located so as to overlap, in the vehicle longitudinal direction DL, with the bottom surface portion 811 of the cab cross member 81. More specifically, the battery case 7 is in a positional relationship with the cab cross member 81 in which an upper surface of the upper cover 702 is positioned above the bottom or lower surface of the cab cross member 81, while a vertical center of the battery case 7 is positioned below a vertical center of the rear-facing wall 812a, and in this embodiment, below the bottom surface of the cab cross member 81.

In this context, the bottom surface portion 811 of the cab cross member 81 corresponds to the "fixed portion" according to the present embodiment, and the rearward extension portion 812 corresponds to the "extension portion." The rear-facing wall 812a and the extension portion 812b respectively correspond to the "rear-facing portion" and the "bracket mounting portion" according to the present embodiment.

Furthermore, the front portion of the battery case 7 extends forward from the rear frame portions 612a and 612b and projects above the connecting portions 613a and 613b, thereby being positioned above the drive unit 4. In this embodiment, the "front portion" of the battery case 7 refers to approximately the front half of the battery case 7 including the front end portion 71. The deck floor 21 of the cargo bed 2 is mounted above the battery case 7 so as to cover it.

Thus, in this embodiment, the battery case 7 is disposed directly below the deck floor 21, and the drive unit 4 is disposed below the battery case 7.

### (Description of Operation and Advantages)

The advantages obtained by the present embodiment will be described below.

First, a cross member (cab cross member) 81 is disposed forward of the battery case 7 so as to extend across the vehicle lateral direction DW between the pair of side frames 61a and 61b. A rear-facing portion (rear-facing wall) 812a of the cab cross member 81 is inclined downwardly toward the front in the vehicle longitudinal direction DL. The battery case 7 is supported at its front portion by a bracket (case front bracket) 75 and is arranged such that it is vertically offset downward relative to the rear-facing wall 812a of the cab cross member 81.

According to this configuration, during a vehicle collision, the battery case 7, which undergoes relative displacement toward the cab cross member 81, is guided downward beneath the cab cross member 81 along the rear-facing wall 812a. This prevents the battery case 7 from striking the cab cross member 81 and sustaining significant damage, thereby protecting the battery. FIG. 5 schematically illustrates, by a two-dot chain line, a battery case 7' guided by the rear-facing wall 812a and positioned such that its front end portion 71 is located beneath the cab cross member 81.

By guiding the battery case 7 downward, the battery case 7 is moved away from the cabin compartment of the cab 1, thereby reducing the influence of the battery-case displacement on the cabin compartment and ensuring safety.

Second, a bracket mounting portion (extension portion) 812b is formed in the extension portion (rearward extension portion) 812 of the cab cross member 81, and the case front bracket 75 is suspended downward from the extension portion 812b and joined to the front end portion 71 of the battery case 7.

This allows the battery case 7 to be firmly supported relative to the pair of side frames 61a and 61b by the case front bracket 75 and the cab cross member 81, and also enables the positional relationship between the battery case 7 and the cab cross member 81, specifically the relationship in which the front portion of the battery case 7 is disposed downwardly offset relative to the rear-facing wall 812a of the cab cross member 81, to be easily established.

Third, pillar portions 82 are formed on each of the pair of side frames 61a and 61b, and the cab cross member 81 is extended between the pillar portions 82 and fixed to each of the side frames 61a and 61b via the pillar portions 82.

Accordingly, loads applied by the battery case 7 can be received by the pair of side frames 61a and 61b through the cab cross member 81, allowing the battery case 7 to be reliably supported on the side frames 61a and 61b.

Fourth, the pillar portions 82 supporting the cab cross member 81 are installed at the connecting portions 613a and 613b provided in the respective side frames 61a and 61b.

This enables the battery case 7 to be protected by the connecting portions 613a and 613b against side impacts to the electric vehicle V, thereby ensuring a high level of safety.

Fifth, the cab cross member 81 for supporting the cab 1 is employed as the cross member located forward of the battery case 7.

This makes it possible to avoid a collision of the battery case 7 with the cab cross member 81, which has high structural strength, thereby effectively protecting the battery.

Sixth, the battery case 7 is suspended and supported between the pair of side frames 61a and 61b, and the drive unit 4 is disposed below the battery case 7.

As a result, noise generated by the drive unit 4, particularly by the electric motor 41, is suppressed from being transmitted to the cabin by the battery case 7, thereby reducing the noise perceived inside the cabin by the driver or passengers.

In the above description, the electric vehicle V is exemplified as a small flatbed truck; however, the electric vehicle V is not limited to this configuration and may be implemented in other vehicle types. For example, a one-box design vehicle having no hood or only a very short hood and a box-shaped body structure (e.g., van or minivan) may also be employed.

When a one-box design vehicle is employed, front-row seats in a cabin and their floor portion (hereinafter referred to as "front floor") is disposed above the front frame portions 611a and 611b of the pair of side frames 61a and 61b, rear-row seats in the cabin and their floor portion (hereinafter referred to as "rear floor") is disposed above the rear frame portions 612a and 612b. The front floor is supported by the front frame portions 611a and 611b, and the rear floor is supported by the rear frame portions 612a and 612b.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

V electric vehicle
1 cab
2 cargo bed
21 deck floor
22, 23, 24 movable gate
31 front wheel
32 rear wheel
4 drive unit
41 electric motor
42 inverter
43 reduction mechanism
5 power transmission mechanism
51 power distribution device
52 rear-wheel drive shaft
53 rear differential gear
54 front-wheel drive shaft
55 front differential gear
6 support mechanism
61a left side frame
61b right side frame
611a, 611b front frame portion
612a, 612b rear frame portion
613a, 613b connecting portion
62a, 62b side bracket
63 cross member
7 battery case
701 case body
702 upper cover
703 support frame
704 support arm
81 cab cross member
811 bottom surface portion
812 rearward extension portion
812a rear-facing wall
812b extension portion

## Claims

1. An electric vehicle (V) comprising:
a drive unit (4) serving as a driving power source for propelling the vehicle;
a pair of side frames (61a, 61b) extending in a vehicle longitudinal direction (DL) and arranged with a spacing therebetween in a vehicle lateral direction (DW);
a battery case (7) for a battery that supplies electric power to the drive unit (4); and
a cross member (81) disposed forward of the battery case (7) and extending in the vehicle lateral direction (DW) between the pair of side frames (61a, 61b);
wherein the drive unit (4) includes an electric motor (41) configured to be driven by electric power stored in the battery,
wherein the cross member (81) includes a rear-facing portion (812a) facing toward the battery case (7), the rear-facing portion (812a) being inclined downward toward a front side in the vehicle longitudinal direction (DL), and
wherein the battery case (7) is disposed with a downward offset relative to the rear-facing portion (812a).

2. The electric vehicle (V) according to claim 1, further comprising a bracket (75) attached to the cross member (81),
wherein the battery case (7) includes a front portion and is supported by the bracket (75) through the front portion.

3. The electric vehicle (V) according to claim 2, wherein the cross member (81) includes:
a fixed portion (811) fixed to each of the pair of side frames (61a, 61b); and
an extension portion (812) extending rearward in the vehicle longitudinal direction (DL) from the fixed portion (811),
wherein the extension portion (812) includes the rear-facing portion (812a) and a bracket mounting portion (812b) to which the bracket (75) is attached,
wherein the bracket (75) hangs from the bracket mounting portion (812b) and is coupled to the front portion of the battery case (7), and
wherein the battery case (7) is supported relative to the pair of side frames (61a, 61b) via the cross member (81).

4. The electric vehicle (V) according to claim 3, further comprising pillar portions (82) standing upward from each of the pair of side frames (61a, 61b),
wherein the cross member (81) is extended between the pillar portions (82), and
wherein the fixed portion (811) is fixed to each of the pair of side frames (61a, 61b) via the pillar portions (82).

5. The electric vehicle (V) according to claim 4, wherein each of the pair of side frames (61a, 61b) includes:
a front frame portion (611a, 611b) extending in the vehicle longitudinal direction (DL);
a rear frame portion (612a, 612b) positioned rearward of and above the front frame portion (611a, 611b) and extending in the vehicle longitudinal direction (DL); and
a connecting portion (613a, 613b) connecting the front frame portion (611a, 611b) and the rear frame portion (612a, 612b) and inclined upward toward the rear,
wherein each pillar portion (82) stands upward from the corresponding connecting portion (613a, 613b).

6. The electric vehicle (V) according to any one of claims 1 to 5, further comprising a cab (1) forming a vehicle cabin,
wherein the cross member (81) is a cab cross member configured to support the cab (1).

7. The electric vehicle (V) according to any one of claims 1 to 6, wherein the battery case (7) is supported between the pair of side frames (61a, 61b).

8. The electric vehicle (V) according to any one of claims 1 to 7, wherein the drive unit (4) is disposed below the battery case (7).
